(19) Europäisches Patentamt
European Patent Office
Office européen des brevets

(11) **EP 4 228 258 A1**

(12) **EUROPEAN PATENT APPLICATION**
published in accordance with Art. 153(4) EPC

(43) Date of publication:
**16.08.2023 Bulletin 2023/33**

(21) Application number: **21896759.4**

(22) Date of filing: **08.11.2021**

(51) International Patent Classification (IPC):
**H04N 19/124** (2014.01)    **H04N 19/105** (2014.01)

(86) International application number:
**PCT/CN2021/129185**

(87) International publication number:
**WO 2022/111258 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.11.2020 CN 202011360060**

(71) Applicant: **BIGO TECHNOLOGY PTE. LTD.**
**Singapore 117440 (SG)**

(72) Inventor: **BAO, Jiajing**
**Guangzhou, Guangdong 511402 (CN)**

(74) Representative: **Yang, Shu**
**Withers & Rogers LLP**
**2 London Bridge**
**London SE1 9RA (GB)**

(54) **VIDEO CODING METHOD AND APPARATUS, DEVICE, AND STORAGE MEDIUM**

(57)    Disclosed in embodiments of the present application are a video coding method and apparatus, a device and a storage medium. The method comprises: according to an actual coding weight of each macroblock subset of a current video frame in a previous video frame, and an actual coding code rate of each coded macroblock subset in the current video frame, predicting a precoding code rate of the current video frame for coding of a current macroblock subset; and on the basis of a code rate difference between the precoding code rate and a pre-allocation code rate of the current video frame under a current network bandwidth, adjusting an actual coding quantization parameter of the current macroblock subset in the previous video frame to acquire a target coding quantization parameter of the current macroblock subset in the current video frame.

Predicting a precoding bit rate of a current macroblock subset is predicted in response to coding the current macroblock subset in a current video frame, based on an actual coding weight of each macroblock subset of the current video frame in a previous video frame, and an actual coding bit rate of each coded macroblock subset in the current video frame — S110

Acquiring a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth — S120

FIG. 1A

## Description

The present disclosure claims priority to Chinese Patent Application No. 202011360060.6, filed on November 27, 2020 with the Patent Office of China, the disclosure of which is incorporated herein by reference in its entirety.

## TECHNICAL FIELD

Embodiments of the present disclosure relate to the technical field of video transmission, for example, to a method and an apparatus for coding videos, a device and a storage medium.

## BACKGROUND OF THE INVENTION

With the rapid development of Internet technologies and the increase of users' demand for high-definition videos, the amount of interactive video data of multimedia resources is also increasing. During video transmission, video compression and decoding technologies are usually used to effectively extract redundant information from video data, so as to achieve the rapid transmission and off-line storage of video data in the Internet. In order to adapt to the bandwidth and device situations of different transmission users, source videos are coded under corresponding bit rates. In video coding in related arts, in the case that the coding complexity is higher, the coding quality is better, but the coding time is longer; and excessive coding time causes a user to experience video lag. Therefore, on the basis of ensuring high-quality coding, it is also necessary to improve the coding speed to reduce the coding time in a video transmission process.

At present, most fast video coding modes in related arts are based on the modification of a coder itself, from frame-level coding to block coding, under the influence of an expected network bandwidth, the image complexity of multiple video frames is continuously analyzed through a large quantity of recursive algorithms adopted at a coding decision part, and then the coding bit rate of each coding block in the video frames is calculated. In this way, the coding cost of each coding block at each recursive depth needs to be calculated by analyzing the image complexity, which causes a large computational burden and increases the coding overhead in the video transmission process.

## SUMMARY OF THE INVENTION

According to embodiments of the present disclosure, a method and an apparatus for coding videos, device and a storage medium are provided to reduce the computational overhead of video coding and ensure the high efficiency of video coding.

In a first aspect, embodiments of the present application provide a method for coding videos. The method includes:

predicting a precoding bit rate of a current macroblock subset in response to coding the current macroblock subset in a current video frame, based on an actual coding weight of each macroblock subset of the current video frame in a previous video frame, and an actual coding bit rate of each coded macroblock subset in the current video frame; and

acquiring a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth.

In a second aspect, embodiments of the present application provide an apparatus for coding videos. The device includes:

a bit rate prediction module, configured to predict a precoding bit rate of a current macroblock subset in response to coding a current macroblock subset in a current video frame, based on an actual coding weight of each macroblock subset of the current video frame in a previous video frame, and an actual coding bit rate of each coded macroblock subset in the current video frame; and

a coding quantization module, configured to acquire a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth.

In a third aspect, embodiments of the present application provide a computer device. The computer device includes:

at least one processor; and
a storage device configured to store at least one program.

The at least one processor, when loading and running the at least one program, is caused to perform the method for coding videos as defined in any embodiments of the present disclosure.

In a fourth aspect, embodiments of the present disclosure provide a computer readable storage medium. The computer readable storage medium stores a computer program, wherein the computer program, when loaded and run by a processor, causes the processor to perform the method for coding videos as defined in any embodiments of the present disclosure.

## BRIEF DESCRIPTION OF THE DRAWINGS

FIG. 1A is a flowchart of a method for coding videos according to an embodiment of the present disclosure;
FIG. 1B is a schematic diagram of a video coding process according to an embodiment of the present disclosure;
FIG. 2A is a flowchart of a method for coding videos according to another embodiment of the present disclosure;
FIG. 2B is a schematic diagram of a video coding process according to another embodiment of the present disclosure;
FIG. 3A is a flow diagram of a method for coding videos according to still another embodiment of the present disclosure;
FIG. 3B is a schematic diagram of a video coding process according to still another embodiment of the present disclosure;
FIG. 4 is a schematic structural diagram of an apparatus for coding videos according to an embodiment of the present disclosure; and
FIG. 5 is a schematic structural diagram of a computer device according to an embodiment of the present disclosure.

## DETAILED DESCRIPTION

The present disclosure is described in detail hereinafter with reference to the accompanying drawings and embodiments. It should be understood that the particular embodiments described herein are illustrative only rather than restrictive. It should also be noted that, for the purpose of description, only some, but not all, of the structures associated with the present disclosure are shown in the drawings. Furthermore, embodiments of the present disclosure and features in the embodiments may be combined with one another without conflict.

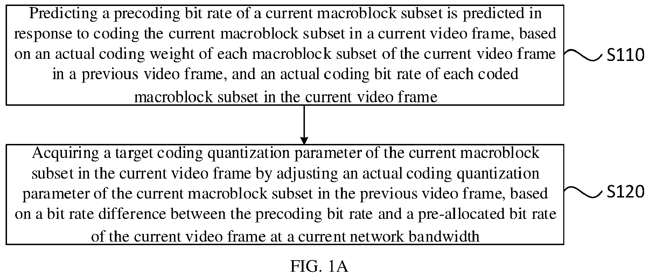

FIG. 1A is a flowchart of a method for coding videos according to some embodiments of the present disclosure. The embodiment is applicable to a scenario where there is a transmission requirement for any video. A method for coding videos according to the embodiment is performed by an apparatus for coding videos according to some embodiments of the present disclosure. The apparatus is implemented by means of software and/or hardware, and integrated in a computer device for performing the method. The computer device is a device participating in video data interaction.

Referring to FIG. 1A, the method includes the following processes.

In S110, a precoding bit rate of a current macroblock subset is predicted in response to coding the current macroblock subset in a current video frame, based on an actual coding weight of each macroblock subset of the current video frame in a previous video frame, and an actual coding bit rate of each coded macroblock subset in the current video frame.

In order to ensure the high transmission efficiency and storage accuracy of video data, when transmitting video data rapidly between different user equipment, the to-be-transmitted video data need to be compressed and coded first, and the compressed and coded video data need to meet the fluctuating requirement of network bandwidth, such that a video lag caused by slow transmission is avoided. At present, when any video data is coded and compressed, the video data is first decapsulated to acquire a plurality of video frames in sequence, and then the plurality of video frames are coded in sequence. Moreover, because two adjacent frames in the video data are usually very similar, and only the fluctuation of the network bandwidth need to be adapted, in process of coding videos in the embodiment, the actual coding mode of the previous video frame is utilized in combination with the influence of a current network bandwidth to effectively guide the coding mode of the current video frame, such that the stability of the video coding quality is improved based on t that the coding of the video frames meets the fluctuating requirement of network bandwidth.

In this way, according to video coding technologies in related arts, each video frame is usually divided into a plurality of macroblocks, and then each macroblock in the video frame is coded separately, regarding one macroblock as a unit, such that the coding of the video frame is realized. The coding specification of the macroblocks is preset, usually 16* 16. Moreover, because the macroblocks in two adjacent frames in one video data have the same size and position, the coding modes of the same macroblocks in the two adjacent frames are relatively similar. Therefore, in the embodiment, the actual coding mode of each macroblock in the previous video frame is utilized to guide the coding mode of the same macroblock in the current video frame. Because adjacent macroblocks in the same video frame have similar video picture complexity, the plurality of macroblocks are coded with the same coding quantization parameter. Therefore, in order to improve the efficiency of video coding, in the case that each of the video frames is coded, all macroblocks in each of the video frames are grouped into a plurality of macroblock subsets based on coding requirements in the embodiment. Then the same coding quantization parameter is set for each of the macroblock subsets, such that each of the macroblocks within the macroblock subsets is coded with the same coding quantization parameter.

It should be noted that each macroblock subset in the embodiment is composed of only one macroblock, or is composed of a plurality of macroblocks. For example, a plurality of macroblocks on the same line in the current video frame compose a macroblock subset, and the embodiment does not limit the quantity of macroblocks in each macroblock subset. The quantity of the macroblocks in each macroblock subset should be as small as possible, such that the coding mode of each macroblock is specifically analyzed to improve the coding quality of each macroblock.

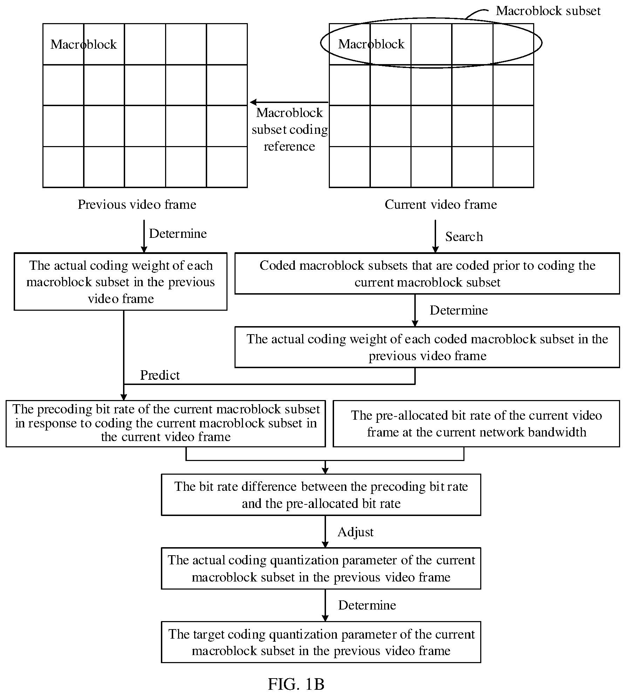

In the embodiment, in the case that the macroblock subset in the current video frame is coded, the current video frame is divided first into a plurality of macroblocks to acquire an effective coding guide for the current video frame by the actual coding mode of the previous video frame, as shown in FIG. 1B. All the macroblocks in the current video frame are combined into a plurality of macroblock subsets according to a macroblock subset size designated for coding. For example, the plurality of macroblocks on each line in the current video frame compose one macroblock subset. Then the actual coding quantity of each macroblock subset is analyzed in response to actually coding the previous video frame, and the actual coding weight of each macroblock subset in the previous video frame is calculated based on the coding ratio of the actual coding quantity of each macroblock subset in the previous video frame to the overall actual coding quantity of the previous video frame. In this case, the actual coding weight represents the coding quality differences among the macroblock subsets. Because each macroblock subset is coded in the order of the macroblock subsets in each video frame, before the current macroblock subset is coded in the current video frame, a plurality of macroblock subsets prior to the current macroblock subset in the current video frame have been coded. By analyzing the coding situation of each macroblock subset in the current video frame, the plurality of coded macroblock subsets are found in the current video frame, and the actual coding bit rate of each coded macroblock subset is determined, so as to predict the precoding bit rate of the current macroblock subset in response to coding the current macroblock subset in the current video frame under the guidance of the actual coding of the previous video frame.

Based on the actual coding weight of each macroblock subset of the previous video frame in the current video frame, the ratios of the coding weights of the coded macroblock subsets to the coding weights of the macroblock subsets are calculated. The actual coding bit rates of the coded macroblock subsets are calculated through the actual coding bit rate of each coded macroblock subset, and then the coding bit rates of the macroblock subsets in the current video frame, i.e., the precoding bit rates of the current macroblock subsets in response to coding the current macroblock subsets in the current video frame, are predicted, based on the coding weight ratios and the actual coding bit rates of the coded macroblock subsets. The precoding bit rate of the current video frame is predicted, based on the coding quality represented by the actual coding weight of each macroblock subset in the previous video frame in combination with the actual coding bit rates of the coded macroblock subsets of the current video frame, which can ensure the consistency of the coding quality between the previous video frame and the current video frame.

It should be noted that because the macroblock subsets in the current video frame are coded in order in the embodiment, the precoding bit rate of the current video frame is predicted in response to coding each macroblock subset in the current video frame based on the actual coding weight of each macroblock subset in the previous video frame and the actual coding bit rate of each coded macroblock subset in the current video frame, so as to ensure the stability of the coding quality of each macroblock subset in the current video frame.

In S 120, a target coding quantization parameter of the current macroblock subset in the current video frame is acquired by adjusting an actual coding quantization parameter of the current macroblock subset in the previous video frame is adjusted, based on a bit rate difference between the precoding bit rate and a pre-allocated bit rate of the current video frame at a current network bandwidth.

For example, in the case that the precoding bit rate of the current video frame for coding of the current macroblock subset is predicted, the precoding bit rate can only ensure the consistency of the coding quality between the previous video frame and the current video frame, but does not meet the requirement of network bandwidth fluctuation. Therefore, in the embodiment, the current network bandwidth of the current video frame needs to be analyzed when coding the current video frame. As shown in FIG. 1B, a coding bit rate that can ensure smooth video transmission at the current network bandwidth, that is, the pre-allocated bit rate in the embodiment, needs to be allocated for the current video frame. In this case, the precoding bit rate can ensure the stability of the coding quality between the previous video frame and the current video frame, and the pre-allocated bit rate can meet the requirement of the current network bandwidth for video transmission. Therefore, in the embodiment, a bit rate difference between the precoding bit rate and the pre-allocated bit rate needs to be analyzed, and the actual coding quantization parameter (QP) of the to-be-coded current macroblock subset in the current video frame in the previous video frame is correspondingly adjusted to acquire a target coding quantization parameter of the current macroblock subset in the current video frame, without calculating the coding cost of each coded block at each recursion depth by analyzing the image complexity, which greatly reduces the coding cost and coding complexity in the video coding process and improves the efficiency of video coding. A coding balance can be achieved between the requirement of video quality stability and the requirement of network bandwidth fluctuation between adjacent frames, such that the target coding quantization parameter of the current macroblock subset in the current video frame can improve the stability of video coding quality on the basis of ensuring that the requirement of network bandwidth fluctuation is met.

In addition, because the network bandwidth fluctuates constantly in a video coding process, there is usually a corresponding frame loss mechanism to ensure the requirement of the network bandwidth for video transmission. In this case, the situation that the coding of the previous video frame is not completed exists due to frame loss when coding the current video frame. In the case that the previous video frame is not coded, a corresponding quantization parameter is specifically set for the current video frame by analyzing the picture complexity of the current video frame, and each macroblock in the current video frame is coded based on the quantization parameter.

Meanwhile, in view of the feature that the network bandwidth fluctuates constantly in the video coding process, in order to ensure the coding accuracy of the current video frame, the embodiment evaluates, based on the coding request of each video frame in a to-be-coded video, the current network bandwidth corresponding to the video frame. In other words, in the case that a video frame is requested to be coded, a current network state is reevaluated to acquire a current network bandwidth matching the to-be-coded current video frame, such that the coding quantization parameter of each macroblock subset in the current video frame can meet the requirement of the current network bandwidth.

In the technical solution according to the embodiment, because the current video frame is coded only after the previous video frame is coded, and the plurality of macroblock subsets in the current video frame are also coded in sequence, each macroblock subset in the current video frame has a corresponding coding mode in the previous video frame. Coded macroblock subsets and uncoded macroblock subsets are present in the current video frame in response to coding the current macroblock subset in the current video frame. The precoding bit rate of the current macroblock subset of the current video frame for coding is predicted by referring to the actual coding weight of each macroblock subset of the current video frame in the previous video frame and the actual coding bit rate of each coded macroblock subset in the current video frame. The actual coding quantization parameter of the current macroblock subset in the previous video frame is adjusted by analyzing the bit rate difference between the precoding bit rate and the pre-allocated bit rate of the current video frame at the current network bandwidth, so as to acquire the target coding quantization parameter of the current macroblock subset in the current video frame and realize the accurate coding of the current video frame, without calculating the coding cost of each coded block at each recursion depth by analyzing the image complexity, which greatly reduces the coding cost and coding complexity in the video coding process and improves the efficiency of video coding. A corresponding adjustment is performed based on the current network bandwidth by directly referring to the actual coding mode of each macroblock subset in the previous video frame, so as to perform coding guidance and adjustment for the current video frame by using the coding mode of the previous video frame and the fluctuation of the current network bandwidth, and improve the stability of the video coding quality on the basis of ensuring that the requirement of network bandwidth fluctuation is met.

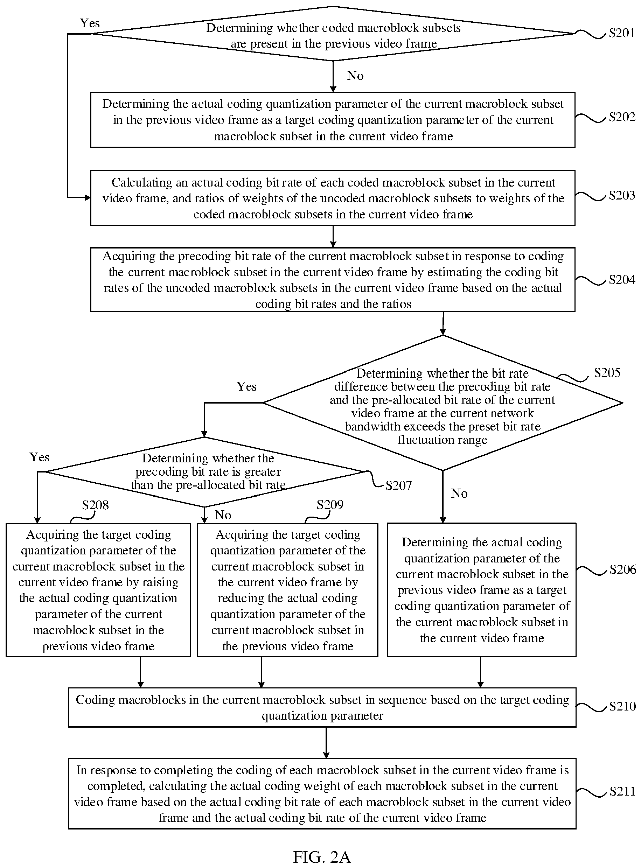

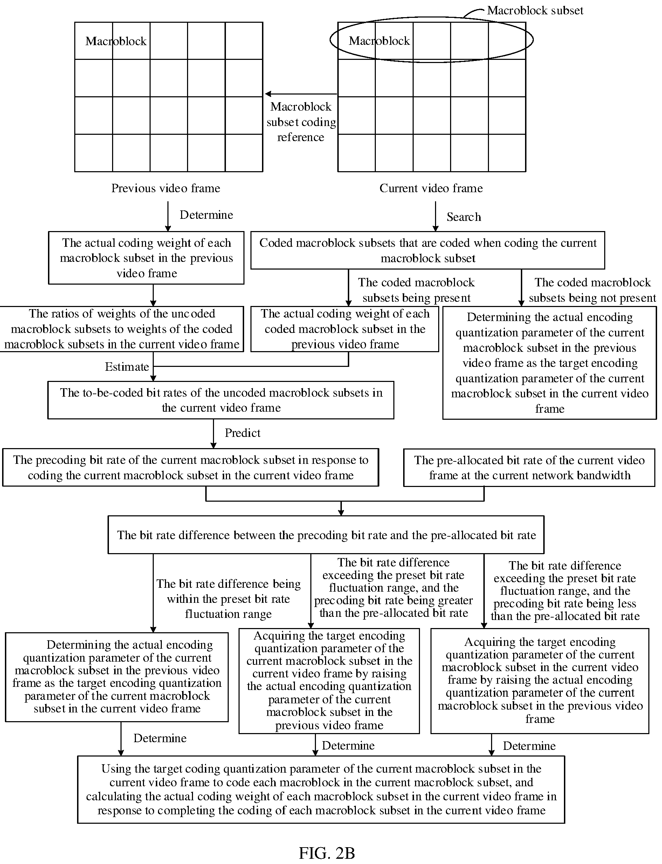

FIG. 2A is a flowchart of a method for coding videos according to another embodiment of the present disclosure. FIG. 2B is a schematic diagram of a video coding process according to another embodiment of the present disclosure. The embodiment is a refinement of the above embodiment. As shown in FIG. 2A, the embodiment provides a detailed explanation of a specific coding process of sequentially coding a plurality of macroblock subsets within a current video frame.

For example, as shown in FIG. 2A, the embodiment includes the following processes.

In S201, whether coded macroblock subsets are present in the current video frame is determined, S203 is performed based on the result that the coded macroblock subsets are presented in the current video frame, and S202 is performed based on the result that the coded macroblock subset are not presented in the current video frame.

For example, prior to coding the current video frame in a to-be coded video frame, the current video frame is divided into a plurality of macroblocks in advance, and the macroblocks are combined to acquire a plurality of macroblock subsets. Subsequently, a corresponding coding quantization parameter is set for each macroblock subset, and each macroblock subset is coded as required. However, the coding quantization parameter need to be calculated by virtue of actual coding modes of the coded macroblock subsets in the current video frame. Therefore, when coding a certain macroblock subset in the current video frame, it is first necessary to determine whether the coded macroblock subsets is present in the current video frame, that is, to determine whether the to-be-coded current macroblock subset in the current video frame is the first to-be-coded macroblock subset in the current video frame. Because coding prediction cannot be performed by virtue of the actual coding modes of the other macroblock subsets when coding the first macroblock subset in the current video frame, based on the existence or inexistence of the coded macroblock subsets in the current video frame, it is necessary to employ different methods to calculate the coding quantization parameter of the to-be-coded current macroblock subset in the current video frame, so as to ensure the coding accuracy of the current macroblock subset.

In S202, an actual coding quantization parameter of the current macroblock subset in a previous video frame is determined as a target coding quantization parameter of the current macroblock subset in the current video frame.

For example, in the case that the coded macroblock subset is not present in the current video frame, it indicates that the to-be-coded current macroblock subset in the current video frame is the first macroblock subset in the current video frame, and a current coding mode cannot be estimated by virtue of the actual coding modes of the other macroblock subsets in the current video frame. In this case, an actual coding mode of the current macroblock subset in the previous video frame is also applicable to the coding of the current macroblock subset in the current video frame to some extent because video pictures of the same macroblock subset in the two adjacent frames are substantially the same. Therefore, in order to improve the high efficiency of video coding, in the embodiment, the actual coding quantization parameter of the current macroblock subset in the previous video frame can be directly determined as the target coding quantization parameter of the current macroblock subset in the current video frame, and each macroblock in the current macroblock subset is coded based on the target coding quantization parameter, so as to ensure the stability of the video coding quality to a certain extent.

In S203, an actual coding bit rate of each coded macroblock subset in the current video frame, and ratios of weights of the uncoded macroblock subsets and the coded macroblock subsets in the current video frame are calculated.

For example, in the case that the coded macroblock subsets are present in the current video frame, it indicates that the to-be-coded current macroblock subset in the current video frame is not the first macroblock subset in the current video frame, and thus the current coding mode can be estimated by virtue of the actual coding modes of the plurality of coded macroblock subsets in the current video frame, so as to further improve the coding accuracy of the current macroblock subset.

In this case, firstly, each coded macroblock subset is found out from the current video frame to acquire the plurality of coded macroblock subsets. Then the actual coding situation of each coded macroblock subset is analyzed, as shown in FIG. 2B, so as to determine the actual coding bit rate of each coded macroblock subset in the current video frame. Meanwhile, the actual coding amount of each macroblock subset in the previous video frame is calculated by analyzing the actual coding situation of each macroblock subset in the previous video frame. Then an actual coding weight of each macroblock subset is calculated based on the ratio of the actual coding amount of each macroblock subset in the previous video frame to the overall coding amount in the previous video frame. Therefore, ratios of weights of the uncoded macroblock subsets to weights the coded macroblock subsets in the current video frame is calculated, such that the coding bit rate of the uncoded macroblock subset in the current video frame is predicted based on the actual coding bit rates of the coded macroblock subsets in the current video frame, so as to predict a precoding bit rate of the current video frame.

In S204, the precoding bit rate of the current macroblock subset is acquired in response to coding the current macroblock subset in the current video frame by estimating coding bit rates of the uncoded macroblock subsets in the current video frame, based on the actual coding bit rates and the weight ratios.

In the embodiment, the actual coding bit rates of the coded macroblock subsets in the current video frame are added to acquire the overall coding bit rate of the coded macroblock subsets in the current video frame. Based on the product of the ratios of weights of the uncoded macroblock subsets to weights of the coded macroblock subsets in the current video frame and the overall coding bit rate, the to-be-coded bit rates of the uncoded macroblock subsets in the current video frame are estimated. The precoding bit rate of the current video frame for coding of the current macroblock subset are predicted by adding the overall coding bit rate of the coded macroblock subsets in the current video frame and the to-be-coded bit rates, so as to ensure the stability of the video coding quality.

For example, the prediction equation of the precoding bit rate of the current video frame for coding of the current macroblock subset is:

$$predframesize = realsize + \frac{weightleft}{weightused} * realsize$$

, wherein *predframesize* is the precoding bit rate of the current video frame for coding of the current macroblock subset, *realsize* is the actual coding bit rates of the coded macroblock subsets in the current video frame, *weightleft* is the actual coding weights of the uncoded macroblock subsets in the current video frame in the previous video frame, and *weightused* is the actual coding weights of the coded macroblock subsets in the current video frame in the previous video frame.

In S205, whether a bit rate difference between the precoding bit rate and a pre-allocated bit rate of the current video frame at a current network bandwidth exceeds a preset bit rate fluctuation range is determined, and S207 is preformed based on the result that the bit rate difference between the precoding bit rate and the pre-allocated bit rate of the current video frame at the current network bandwidth exceeds the preset bit rate fluctuation range, and S206 is performed based on the result that the bit rate difference between the precoding bit rate and the pre-allocated bit rate of the current video frame at the current network bandwidth is within the preset bit rate fluctuation range.

For example, in the case that the precoding bit rate of the current video frame for coding of the current macroblock subset is predicted, because the precoding bit rate is predicted by means of the actual coding situation of the previous video frame, only the stability of the video coding quality can be ensured, while to meet the transmission requirement of the current network bandwidth cannot be ensured. Therefore, an appropriate bit rate is allocated in the embodiment to the current video frame according to the current network bandwidth, i.e., the pre-allocated bit rate in the embodiment. In this case, whether the bit rate difference between the precoding bit rate and the pre-allocated bit rate exceeds the preset bit rate fluctuation range is determined to analyze whether the actual coding quantization parameter of the current macroblock subset in the previous video frame is applicable to the coding of the current macroblock subset in the current video frame, such that the coding of the current macroblock subset in the current video frame can not only ensure the stability of the video coding quality, but also ensure that the transmission requirement of the current network bandwidth is met.

In S206, the actual coding quantization parameter of the current macroblock subset in the previous video frame is determined as a target coding quantization parameter of the current macroblock subset in the current video frame.

In the case that the bit rate difference between the precoding bit rate and the pre-allocated bit rate is within the preset bit rate fluctuation range, it indicates that the precoding bit rate also meets the transmission requirement of the current network bandwidth within a certain error range. In this case, because the precoding bit rate is predicted by the actual coding situation of the previous video frame, the actual coding quantization parameter of the current macroblock subset in the previous video frame is directly determined as the target coding quantization parameter of the current macroblock subset in the current video frame, so as to ensure the stability of the video coding quality on the basis of ensuring that the requirement of the current network bandwidth is met.

In S207, whether the precoding bit rate is greater than the pre-allocated bit rate is determined, and S208 is performed based on the result that the precoding bit rate is greater than the pre-allocated bit rate, and S209 is performed based on the result that the precoding bit rate is less than the pre-allocated bit rate.

For example, in the case that the bit rate difference between the precoding bit rate and the pre-allocated bit rate exceeds the preset bit rate fluctuation range, there are two cases: 1) the precoding bit rate is greater than the pre-allocated bit rate; and 2) the precoding bit rate is less than the pre-allocated bit rate. Different quantization parameter adjustment methods are employed in different cases. Therefore, in the case that it is determined that the bit rate difference between the precoding bit rate and the pre-allocated bit rate exceeds the preset bit rate fluctuation range, it is also necessary to further determine whether the precoding bit rate is greater than the pre-allocated bit rate, so as to implement the corresponding quantization parameter adjustment method on the current macroblock subset to ensure the coding accuracy of the current macroblock subset in the current video frame.

In S208, the target coding quantization parameter of the current macroblock subset in the current video frame is acquired by raising the actual coding quantization parameter of the current macroblock subset in the previous video frame.

For example, in the case that it is determined that the precoding bit rate is greater than the pre-allocated bit rate, it indicates that the precoding bit rate exceeds the preset bit rate fluctuation range as compared with the pre-allocated bit rate, and cannot meet the requirement of the current network bandwidth, and the precoding bit rate is predicted based on the actual coding condition of the previous video frame. Therefore, by analyzing the bit rate difference between the precoding bit rate and the pre-allocated bit rate, the actual coding quantization parameter of the current macroblock subset in the previous video frame is raised based on a ratio related to the bit rate difference, so as to acquire the target coding quantization parameter of the current macroblock subset in the current video frame. In this case, raising the coding quantization parameter can reduce spatial coding details of the current macroblock subset, such that the precoding bit rate is reduced to get closer to the pre-allocated bit rate, thereby ensuring the stability of the video coding quality on the basis of ensuring that the requirement of the current network bandwidth is met.

In S209, the target coding quantization parameter of the current macroblock subset in the current video frame is acquire by reducing the actual coding quantization parameter of the current macroblock subset in the previous video frame.

For example, in the case that it is determined that the precoding bit rate is less than the pre-allocated bit rate, it indicates that the precoding bit rate is within the preset bit rate fluctuation range as compared with the pre-allocated bit rate, and cannot meet the requirement of the current network bandwidth, and the precoding bit rate is predicted based on the actual coding condition of the previous video frame. Therefore, by analyzing the bit rate difference between the precoding bit rate and the pre-allocated bit rate, the actual coding quantization parameter of the current macroblock subset in the previous video frame is reduced based on a ratio related to the bit rate difference, so as to acquire the target coding quantization parameter of the current macroblock subset in the current video frame. In this case, reducing the coding quantization parameter increases the quantity of the spatial coding details of the current macroblock subset, such that the precoding bit rate is increased to get closer to the pre-allocated bit rate, thereby ensuring the stability of the video coding quality on the basis of ensuring that the requirement of the current network bandwidth is met.

In S210, each macroblock in the current macroblock subset is coded in sequence with the target coding quantization parameter.

In the embodiment, in the case that the target coding quantization parameter of the current macroblock subset in the current video frame is acquired, the target coding quantization parameter is directly used to code each macroblock in the current macroblock subset in sequence, then the target coding quantization parameter of the next macroblock subset in the current video frame is calculated, and the process is repeated in sequence until the coding of each macroblock subset in the current video frame is completed, so as to realize the accurate coding of the current video frame and continue to code the next video frame.

In S211, in response to completing the coding of each macroblock subset in the current video frame, the actual coding weight of each macroblock subset in the current video frame is calculated, based on the actual coding bit rate of each macroblock subset in the current video frame and the actual coding bit rate of the current video frame.

For example, in the case that the coding of each macroblock subset in the current video frame, i.e., the coding of the current video frame, is completed, the actual coding weight of each macroblock subset in the current video frame needs to be calculated to facilitate accurate coding of each macroblock subset in the next video frame. The actual coding bit rate of each macroblock subset in the current video frame and the overall actual coding bit rate of the current video frame are first calculated based on the actual coding situation of each macroblock subset in the current video frame. Then the bit rate ratio of the actual coding bit rate of each macroblock subset to the overall actual coding bit rate of the current video frame is determined as the actual coding weight of the macroblock subset in the current video frame.

For example, in the embodiment, the calculation equation of the actual coding weight of each macroblock subset in the current video frame is:

$$curweight = \frac{curbits}{framesize}$$

, wherein *curweight* is the actual coding weight of each macroblock subset, *curbits* is the actual coding bit rate of the macroblock subset in the current video frame, and *framesize* is the actual coding bit rate of the current video frame.

Regarding to the technical solution according to the embodiment, the precoding bit rate of the current macroblock subset of the current video frame for coding is predicted by referring to the actual coding weight of each macroblock subset of the current video frame in the previous video frame, and the actual coding bit rate of each coded macroblock subset in the current video frame. The actual coding quantization parameter of the current macroblock subset in the previous video frame is adjusted by analyzing the bit rate difference between the precoding bit rate and the pre-allocated bit rate of the current video frame at the current network bandwidth, so as to acquire the target coding quantization parameter of the current macroblock subset in the current video frame and realize the accurate coding of the current video frame, without calculating the coding cost of each coded block at each recursion depth by analyzing the image complexity, which greatly reduces the coding cost and coding complexity in the video coding process and improves the efficiency of video coding. A corresponding adjustment is performed based on the current network bandwidth by directly referring to the actual coding mode of each macroblock subset in the previous video frame, so as to perform coding guidance and adjustment for the current video frame by using the coding mode of the previous video frame and the fluctuation of the current network bandwidth, and improve the stability of the video coding quality on the basis of ensuring that the requirement of network bandwidth fluctuation is met.

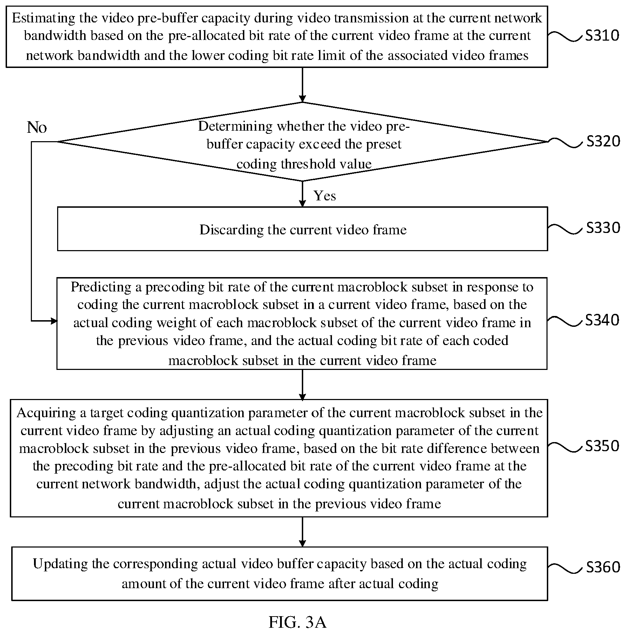

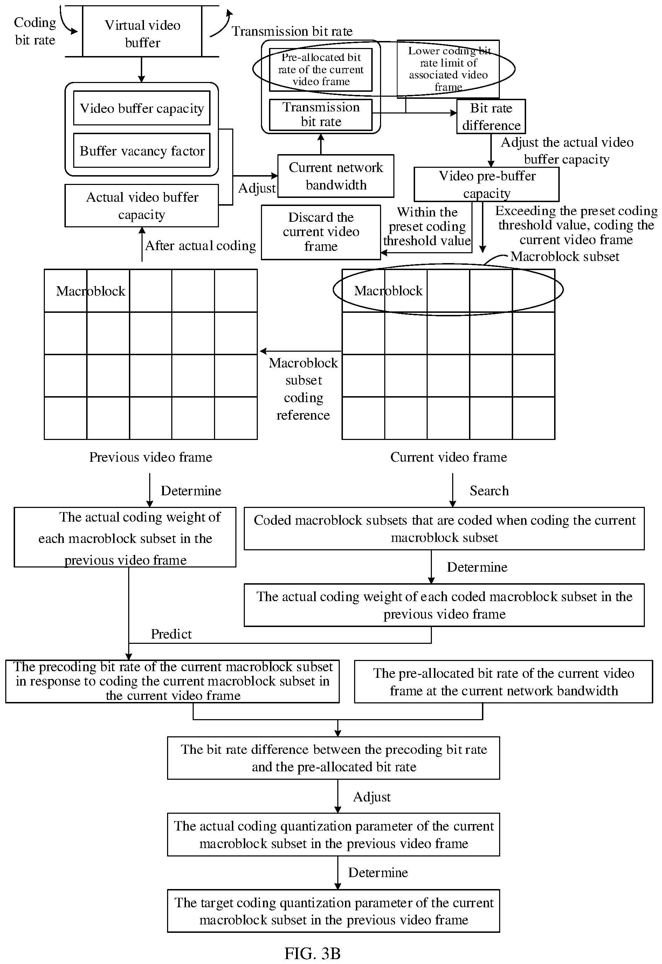

FIG. 3A is a flowchart of a method for coding videos according to still another embodiment of the present disclosure. FIG. 3B is a schematic diagram of a video coding process according to still another embodiment of the present disclosure. The embodiment is a refinement of the above embodiment. As shown in FIG. 3A, the embodiment provides a detailed explanation of a specific implementation process of a frame loss strategy in a video coding process.

For example, as shown in FIG. 3A, the embodiment includes the following processes.

In S310, a video pre-buffer amount during video transmission at a current network bandwidth is estimated based on a pre-allocated bit rate of a current video frame at the current network bandwidth and lower coding bit rate limits of associated video frames.

For example, the fluctuation requirement of the network bandwidth is not met in the case that each video frame is coded and transmitted, and therefore, considering that video pictures of adjacent frames are approximately the same, a frame loss mechanism is set in the embodiment to meet the fluctuation requirement of the network bandwidth, that is, in the case that the transmission requirement of the current network bandwidth is not met, the coding of a certain video frame is appropriately discarded to relieve the transmission pressure of the current network bandwidth.

In the embodiment, a virtual video buffer is preset in order to accurately analyze whether the video coding meets the transmission requirement of the current network bandwidth, a video frame that is coded but not successfully transmitted is buffered in the virtual video buffer, and meanwhile the total buffer capacity of the virtual video buffer is determined to analyze the pre-allocated bit rate that is applicable to the current network bandwidth and allocated to the current video frame under the influence of video buffer of the virtual video buffer. Because the virtual video buffer buffers a plurality of subsequent associated video frames when transmitting the current video frame at the current network bandwidth, it is also necessary to refer to the influence of the subsequent associated video frames when the coding bit rate of the current video frame is required to meet the transmission requirement of the current network bandwidth. It should be noted that the associated video frames in the embodiment are eight consecutive frames upon the current video frame, and the quantity of the associated video frames is not limited.

Therefore, the embodiment can determine the real-time coding bit rates of the virtual video buffer for the current video frame and the associated video frames by analyzing the pre-allocated bit rate of the current video frame at the current network bandwidth and the lower coding bit rate limits of the associated video frames. The video transmission rate of the virtual video buffer at the current network bandwidth is analyzed, and the buffer capacity during video transmission at the current network bandwidth is estimated based on the current actual buffer occupancy of the virtual video buffer in combination with a difference between the real-time coding bit rate and the real-time transmission rate.

For example, in order to improve the estimation accuracy of the video pre-buffer amount, as shown in FIG. 3B, the estimation of the video pre-buffer amount during video transmission at the current network bandwidth based on the pre-allocated bit rate of the current video frame at the current network bandwidth and the lower coding bit rate limits of the associated video frames in the embodiment includes: acquiring the pre-allocated bit rate of the current video frame and a transmission bit rate during video transmission at the current network bandwidth by adjusting the current network bandwidth based on an actual video buffer amount, a buffer capacity and a buffer vacancy factor after actual coding of a previous video frame; and acquiring the video pre-buffer amount during video transmission at the current network bandwidth by adjusting the actual video buffer amount by virtue of a bit rate difference between the pre-allocated bit rate of the current video frame and the transmission bit rate and a bit rate difference between the lower coding bit rate limits of the associated video frames and the transmission bit rate.

In the case that the previous video frame is coded, the actual video buffer amount of the virtual video buffer upon actually coding the previous video frame is calculated based on an actual buffer situation, and then occupied space in the virtual video buffer is determined by analyzing a ratio of the actual video buffer amount to the buffer capacity of the virtual video buffer. Because the occupied space in the virtual video buffer is too large, certain negative pressure is generated on the video transmission and coding at the current network bandwidth. The longer the idling time of the virtual video buffer is, the easier the video transmission and coding at the current network bandwidth are. The buffer vacancy factor in the embodiment is set to represent positive pressure on the video transmission and coding at the current network bandwidth. A bit rate of the current network bandwidth for the current video frame at a current frame rate is correspondingly adjusted by virtue of the negative pressure produced by the occupied space and the positive pressure produced by the buffer vacancy factor, so as to acquire the pre-allocated bit rate of the current video frame and the transmission bit rate of video transmission at the current network bandwidth. The pre-allocated bit rate and the transmission bit rate are related to the current network bandwidth, and is calculated using the same equation:

$$sendbits \ or \ framebits = \frac{bitwidth}{fps} * \left( 1.05 - 0.2 * \frac{bufferfill}{buffersize} \right) * const\_zero\_factor$$

, wherein $sendbits$ is the transmission bit rate of video transmission at the current network bandwidth, $framebits$ is the pre-allocated bit rate of the current video frame, $bitwidth$ is the current network bandwidth, $fps$ is the current frame rate, 1.05 is an adjustment factor existing when the virtual video buffer is vacant, 0.2 is a fast compression factor existing when the virtual video buffer is full, $bufferfill$ is the actual video buffer amount upon the actual coding of the previous video frame, $buffersize$ is the buffer capacity, and $const\_zero\_factor$ is the buffer vacancy factor.

For example, in the case that the pre-allocated bit rate of the current video frame and the transmission bit rate of video transmission at the current network bandwidth are calculated, a dynamic change rate of the virtual video buffer is determined by analyzing a bit rate difference between the pre-allocated bit rate of the current video frame and the transmission bit rate and a bit rate difference between the lower coding bit rate limits of the associated video frames, and then the current actual video buffer amount is adjusted based on the dynamic change rate, so as to acquire the video pre-buffer amount at the time of video transmission at the current network bandwidth. For example, the calculation equation          of          the          video          pre-buffer          amount          may          be:

$$buffer_2 = buffer_1 + framebits - sendbits + \sum_{n=0}^{8} curframebits_n - sendbits * 8$$

wherein $buffer_2$ is the video pre-buffer amount of video transmission at the current network bandwidth, $buffer_1$ is the actual video buffer amount, $framebits$ is the pre-allocated bit rate of the current video frame, $sendbits$ is the transmission bit rate of video transmission at the current network bandwidth, and $curframebits_n$ is the lower coding bit rate limit of the nth frame of the associated video frames.

It should be noted that in order to ensure the coding accuracy of the current video frame, the lower coding bit rate limit of the current video frame is also analyzed in the embodiment, such that the coding bit rate is not lower than the lower coding bit rate limit. Therefore, in the case that the pre-allocated bit rate is lower than the lower coding bit rate limit of the current video frame, the pre-allocated bit rate needs to be updated to be the lower coding bit rate limit of the current video frame, so as to use the lower coding bit rate limit of the current video frame to perform a bit rate analysis on the current video frame to improve the coding accuracy of the current video frame.

In S320, whether the video pre-buffer amount exceeds a preset coding threshold value is determined, and S330 is performed based on the result that the video pre-buffer amount exceeds the preset coding threshold value, and S340 is performed based on the result that the video pre-buffer amount is within the preset coding threshold value.

For example, in order to accurately analyze whether the current network bandwidth supports the coding of the current video frame, that is, whether the coding of the current video frame produces transmission pressure on the current network bandwidth, a preset coding threshold value is preset in the embodiment. In the case that the video pre-buffer amount upon the coding analysis of the current video frame exceeds the preset coding threshold value, it indicates that the transmission pressure on the current network bandwidth is produced. The preset coding threshold value in the embodiment is set as $0.1*buffersize$, wherein $buffersize$ is the buffer capacity.

In S330, the current video frame is discarded.

For example, in the case that the video pre-buffer amount exceeds the preset coding threshold value, the current video frame is discarded rather than coded, so as to relieve the transmission pressure of the current network bandwidth. However, in the case that the video pre-buffer amount is within the preset coding threshold value, it indicates that the coding of the current video frame does not produce transmission pressure on the current network bandwidth, and then the target coding quantization parameter of each macroblock subset in the current video frame needs to be accurately estimated to realize the accurate coding of the current video frame.

In S340, a precoding bit rate of the current macroblock subset is predicted in response to coding the current macroblock subset in a current video frame, based on an actual coding weight of each macroblock subset of the current video frame in the previous video frame, and an actual coding bit rate of each coded macroblock subset in the current video frame.

In S350, a target coding quantization parameter of the current macroblock subset in the current video frame is acquired by adjusting an actual coding quantization parameter of the current macroblock subset in the previous video frame, based on a bit rate difference between the precoding bit rate and a pre-allocated bit rate of the current video frame at the current network bandwidth.

In S360, a corresponding actual video buffer amount is updated based on the actual coding amount of the current video frame.

For example, in the case that the coding of the current video frame is completed, in order to ensure an accurate analysis of the video pre-buffer amount of coding of the next video frame, the actual coding amount of the current video frame is analyzed in the embodiment, and then a current actual video replacement amount is updated with reference to an actual transmission situation and the actual coding amount, so as to improve the coding analysis of the next video frame.

In the technical solution according to the embodiment, prior to coding the current video frame, whether a transmission pressure is produced at the current network bandwidth is determined firstly by estimating the video pre-buffer amount during video transmission at the current network bandwidth, so as to set a corresponding frame loss mechanism to improve the accuracy and efficiency of video coding on the basis of ensuring that the requirement of the current network bandwidth is met.

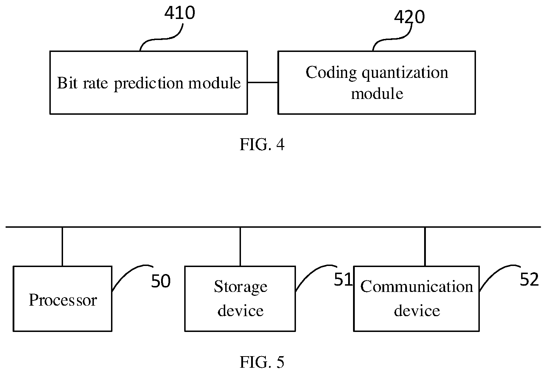

FIG. 4 is a schematic structural diagram of an apparatus for coding videos according to some embodiments of the present disclosure. As shown in FIG. 4, the device includes:

a bit rate prediction module 410, configured to predict a precoding bit rate of a current macroblock subset in response to coding a current macroblock subset in a current video frame, based on an actual coding weight of each macroblock subset of the current video frame in a previous video frame, and an actual coding bit rate of each coded macroblock subset in the current video frame; and
a coding quantization module 420, configured to acquire a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth.

In the technical solution according to the embodiment, because the current video frame is coded only after the previous video frame is coded, and the plurality of macroblock subsets in the current video frame are also coded in sequence, each macroblock subset in the current video frame has a corresponding coding mode in the previous video frame. Coded macroblock subsets and uncoded macroblock subsets are present in in the current video frame in response to coding the current macroblock subset in the current video frame. The precoding bit rate of the current macroblock subset of the current video frame for coding is predicted by referring to the actual coding weight of each macroblock subset of the current video frame in the previous video frame and the actual coding bit rate of each coded macroblock subset in the current video frame. The actual coding quantization parameter of the current macroblock subset in the previous video frame is adjusted by analyzing the bit rate difference between the precoding bit rate and the pre-allocated bit rate of the current video frame at the current network bandwidth, so as to acquire the target coding quantization parameter of the current macroblock subset in the current video frame and realize the accurate coding of the current video frame, without calculating the coding cost of each coded block at each recursion depth by analyzing the image complexity, which greatly reduces the coding cost and coding complexity in the video coding process and improves the efficiency of video coding. A corresponding adjustment is performed based on the current network bandwidth by directly referring to the actual coding mode of each macroblock subset in the previous video frame, so as to perform coding guidance and adjustment for the current video frame by using the coding mode of the previous video frame and the fluctuation of the current network bandwidth, and improve the stability of the video coding quality on the basis of ensuring that the requirement of network bandwidth fluctuation is met.

The apparatus for coding videos according to the embodiment is applicable to the method for coding videos according to any of the above embodiments, and has corresponding functions and beneficial effects.

FIG. 5 is a schematic structural diagram of a computer device according to some embodiments of the present disclosure. As shown in FIG. 5, a server includes one or more processors 50 (one processor 50 in FIG. 5, for example), a storage device 51 and a communication device 52. The processor 50, the storage device 51 and the communication device 52 in the device are connected by a bus or other means (by a bus in FIG. 5, for example).

The computer device according to the embodiment is configured to perform the method for coding videos according to any of the above embodiments, and has corresponding functions and beneficial effects.

An embodiment of the present disclosure further provides a computer readable storage medium, the computer readable storage medium stores a computer program, wherein a processor, when loading and executing the program, is caused to perform the method for coding videos according to any of the above embodiments. The method includes:

predicting a precoding bit rate of a current macroblock subset in response to coding the current macroblock subset in a current video frame, based on an actual coding weight of each macroblock subset of the current video frame in a previous video frame, and an actual coding bit rate of each coded macroblock subset in the current video frame; and

acquiring a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth.

A storage medium containing computer-executable instructions according to some embodiments of the present disclosure is not limited to operation in the above method, and also executes related operation in the method for coding videos according to any embodiments of the present disclosure.

According to the above descriptions of the embodiments, those skilled in the art can clearly understand that the present disclosure can be implemented by software and necessary general hardware, and of course by hardware. Based on such understanding, the technical solution of the present disclosure, either essentially or in part making a contribution to the prior art, may be embodied in the form of a software product. The computer software product may be stored in the computer-readable storage medium, such as a floppy disk, a read-only memory (ROM), a random access memory (RAM), a flash memory, a hard disk or an optical disk of a computer, includes a plurality of instructions that are used to enable the computer device (such as a personal computer, a server or a network equipment) to perform the methods according to embodiments of the present disclosure.

It should be noted that in the embodiment of the above apparatus for coding videos, the units and modules included in the apparatus for coding videos are merely grouped according to functional logic, but are not limited to the above division, and all that is required in division is to realize corresponding functions. In addition, the specific names of the multifunctional units are merely for the convenience of mutual distinguishing and are not intended to limit the scope of protection of the present disclosure. The computer readable storage medium may be a non-transient computer readable storage medium.

**Claims**

1. A method for coding videos, comprising:

predicting a precoding bit rate of a current macroblock subset in response to coding the current macroblock subset in a current video frame, based on an actual coding weight of each macroblock subset of the current video frame in a previous video frame, and an actual coding bit rate of each coded macroblock subset in the current video frame, wherein the video frame comprises a plurality of macroblocks, the plurality of macroblocks being grouped into a plurality of macroblock subsets, and the macroblock subsets comprising at least one coded macroblock subset; and

acquiring a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth.

2. The method according to claim 1, wherein the macroblock subsets comprise uncoded macroblock subsets, and predicting the precoding bit rate of the current macroblock subset in response to coding the current macroblock subset in the current video frame, based on the actual coding weight of each macroblock subset of the current video frame in the previous video frame, and the actual coding bit rate of each coded macroblock subset in the current video frame comprises:

in response to determining that at least one coded macroblock subset is present in the current video frame, calculating the actual coding bit rate of each coded macroblock subset in the current video frame, and ratios of weights of the uncoded macroblock subsets to a weight of the at least one coded macroblock subset in the current video frame; and
acquiring the precoding bit rate of the current macroblock subset in response to coding the current macroblock subset in the current video frame by estimating coding bit rates of the uncoded macroblock subsets in the current video frame, based on the actual coding bit rates and the ratios.

3. The method according to claim 2, further comprising:
in response to determining that the coded macroblock subset is not present in the current video frame, determining the actual coding quantization parameter of the current macroblock subset in the previous video frame as the target coding quantization parameter of the current macroblock subset in the current video frame.

4. The method according to claim 1, wherein acquiring the target coding quantization parameter of the current macroblock subset in the current video frame by adjusting the actual coding quantization parameter of the current macroblock subset in the previous video frame, based on the bit rate difference between the precoding bit rate and the pre-allocated bit rate of the current video frame at the current network bandwidth comprises:

in response to determining that the bit rate difference between the precoding bit rate and the pre-allocated bit rate is within a preset bit rate fluctuation range, determining the actual coding quantization parameter of the current macroblock subset in the previous video frame as the target coding quantization parameter of the current macroblock subset in the current video frame;
in response to determining that the bit rate difference between the precoding bit rate and the pre-allocated bit rate exceeds the preset bit rate fluctuation range, and that the precoding bit rate is greater than the pre-allocated bit rate, acquiring the target coding quantization parameter of the current macroblock subset in the current video frame by raising the actual coding quantization parameter of the current macroblock subset in the previous video frame; and
in response to determining that the bit rate difference between the precoding bit rate and the pre-allocated bit rate exceeds the preset bit rate fluctuation range, and that the precoding bit rate is less than the pre-allocated bit rate, acquiring the target coding quantization parameter of the current macroblock subset in the current video frame by reducing the actual coding quantization parameter of the current macroblock subset in the previous video frame.

5. The method according to claim 1, wherein upon acquiring the target coding quantization parameter of the current macroblock subset in the current video frame, the method further comprises:
coding macroblocks in the current macroblock subset in sequence based on the target coding quantization parameter.

6. The method according to claim 5, wherein upon coding the macroblocks in the current macroblock subset in sequence based on the target coding quantization parameter, the method further comprises:
in response to determining that the coding of each macroblock subset in the current video frame is completed, calculating an actual coding weight of each macroblock subset in the current video frame, based on the actual coding bit rate of each macroblock subset in the current video frame and the actual coding bit rate of the current video frame.

7. The method according to any of claims 1 to 6, wherein prior to predicting the precoding bit rate of the current macroblock subset in response to coding the current macroblock subset in the current video frame, the method further comprises:
estimating a video pre-buffer amount during video transmission at the current network bandwidth based on the pre-allocated bit rate of the current video frame at the current network bandwidth and lower coding bit rate limits of associated video frames, and coding the current video frame in response to the video pre-buffer amount being within a preset coding threshold value.

8. The method according to claim 7, wherein estimating the video pre-buffer amount during video transmission at the current network bandwidth based on the pre-allocated bit rate of the current video frame at the current network bandwidth and the lower coding bit rate limits of the associated video frames comprises:

acquiring the pre-allocated bit rate of the current video frame and a transmission bit rate during video transmission at the current network bandwidth by adjusting the current network bandwidth based on an actual video buffer amount, a buffer capacity and a buffer vacancy factor in response to actually coding the previous video frame; and acquiring the video pre-buffer amount during video transmission at the current network bandwidth by adjusting the actual video buffer amount based on a bit rate difference between the pre-allocated bit rate of the current video frame and the transmission bit rate and a bit rate difference between the lower coding bit rate limits of the associated video frames and the transmission bit rate.

9. The method according to claim 8, wherein upon acquiring the video pre-buffer amount during video transmission at the current network bandwidth by adjusting the current network bandwidth based on the video buffer amount, the buffer capacity and the buffer vacancy factor in response to actually coding the previous video frame, the method further comprises:
in response to determining that the pre-allocated bit rate is less than a lower coding bit rate limit of the current video frame, updating the pre-allocated bit rate to the lower coding bit rate limit of the current video frame.

10. The method according to claim 7, wherein upon estimating the video pre-buffer amount during video transmission at the current network bandwidth, the method further comprises:
in response to determining that the video pre-buffer amount exceeds the preset coding threshold value, discarding the current video frame.

11. The method according to claim 7, wherein upon acquiring the target coding quantization parameter of the current macroblock subset in the current video frame, the method further comprises:
updating an actual video buffer amount corresponding to the current video frame based on an actual coding amount of the current video frame upon actual coding.

12. The method according to any of claims 1 to 6, wherein a to-be-coded video comprises a plurality of video frames, and prior to predicting the precoding bit rate of the current macroblock subset in response to coding the current macroblock subset in the current video frame, the method further comprises:
evaluating a current network bandwidth corresponding to each video frame in the to-be-coded video based on a coding request of the video frame.

13. An apparatus for coding videos, comprising:

a bit rate prediction module, configured to predict a precoding bit rate of a current macroblock subset in response to coding a current macroblock subset in a current video frame, based on an actual coding weight of each macroblock subset of the current video frame in a previous video frame, and an actual coding bit rate of each coded macroblock subset in the current video frame; and
a coding quantization module, configured to acquire a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth.

14. A computer device, comprising:

at least one processor; and
a storage device, configured to store at least one program,
wherein the at least one processor, when loading and running the at least one program, is caused to perform the method for coding videos as defined in any one of claims 1 to 12.

15. A computer readable storage medium, wherein the computer readable storage medium stores a computer program, wherein the computer program, when loaded and run by a processor, causes the processor to perform the method for coding videos as defined in any one of claims 1 to 12.

Predicting a precoding bit rate of a current macroblock subset is predicted in response to coding the current macroblock subset in a current video frame, based on an actual coding weight of each macroblock subset of the current video frame in a previous video frame, and an actual coding bit rate of each coded macroblock subset in the current video frame

S110

Acquiring a target coding quantization parameter of the current macroblock subset in the current video frame by adjusting an actual coding quantization parameter of the current macroblock subset in the previous video frame, based on a bit rate difference between the precoding bit rate and a pre-allocated bit rate of the current video frame at a current network bandwidth

S120

FIG. 1A

Macroblock subset

| Macroblock | | | |
|---|---|---|---|
| | | | |
| | | | |
| | | | |

| Macroblock | | | |
|---|---|---|---|
| | | | |
| | | | |
| | | | |

Macroblock subset coding reference

Previous video frame                 Current video frame

Determine ↓                           ↓ Search

| The actual coding weight of each macroblock subset in the previous video frame |

| Coded macroblock subsets that are coded prior to coding the current macroblock subset |

Determine

| The actual coding weight of each coded macroblock subset in the previous video frame |

Predict

| The precoding bit rate of the current macroblock subset in response to coding the current macroblock subset in the current video frame |

| The pre-allocated bit rate of the current video frame at the current network bandwidth |

| The bit rate difference between the precoding bit rate and the pre-allocated bit rate |

Adjust

| The actual coding quantization parameter of the current macroblock subset in the previous video frame |

Determine

| The target coding quantization parameter of the current macroblock subset in the previous video frame |

FIG. 1B

Determining whether coded macroblock subsets are present in the previous video frame — Yes / No — S201

Determining the actual coding quantization parameter of the current macroblock subset in the previous video frame as a target coding quantization parameter of the current macroblock subset in the current video frame — S202

Calculating an actual coding bit rate of each coded macroblock subset in the current video frame, and ratios of weights of the uncoded macroblock subsets to weights of the coded macroblock subsets in the current video frame — S203

Acquiring the precoding bit rate of the current macroblock subset in response to coding the current macroblock subset in the current video frame by estimating the coding bit rates of the uncoded macroblock subsets in the current video frame based on the actual coding bit rates and the ratios — S204

Determining whether the bit rate difference between the precoding bit rate and the pre-allocated bit rate of the current video frame at the current network bandwidth exceeds the preset bit rate fluctuation range — Yes / No — S205

Determining whether the precoding bit rate is greater than the pre-allocated bit rate — Yes / No — S207

Acquiring the target coding quantization parameter of the current macroblock subset in the current video frame by raising the actual coding quantization parameter of the current macroblock subset in the previous video frame — S208

Acquiring the target coding quantization parameter of the current macroblock subset in the current video frame by reducing the actual coding quantization parameter of the current macroblock subset in the previous video frame — S209

Determining the actual coding quantization parameter of the current macroblock subset in the previous video frame as a target coding quantization parameter of the current macroblock subset in the current video frame — S206

Coding macroblocks in the current macroblock subset in sequence based on the target coding quantization parameter — S210

In response to completing the coding of each macroblock subset in the current video frame is completed, calculating the actual coding weight of each macroblock subset in the current video frame based on the actual coding bit rate of each macroblock subset in the current video frame and the actual coding bit rate of the current video frame — S211

FIG. 2A

Macroblock subset

| Macroblock | | | |
|---|---|---|---|
| | | | |
| | | | |
| | | | |

Previous video frame

| Macroblock | | | |
|---|---|---|---|
| | | | |
| | | | |
| | | | |

Current video frame

Macroblock subset coding reference ←

Determine ↓

Search ↓

The actual coding weight of each macroblock subset in the previous video frame

Coded macroblock subsets that are coded when coding the current macroblock subset

The coded macroblock subsets being present

The coded macroblock subsets being not present

The ratios of weights of the uncoded macroblock subsets to weights of the coded macroblock subsets in the current video frame

The actual coding weight of each coded macroblock subset in the previous video frame

Determining the actual encoding quantization parameter of the current macroblock subset in the previous video frame as the target encoding quantization parameter of the current macroblock subset in the current video frame

Estimate ┤

The to-be-coded bit rates of the uncoded macroblock subsets in the current video frame

Predict ↓

The precoding bit rate of the current macroblock subset in response to coding the current macroblock subset in the current video frame

The pre-allocated bit rate of the current video frame at the current network bandwidth

The bit rate difference between the precoding bit rate and the pre-allocated bit rate

The bit rate difference being within the preset bit rate fluctuation range

The bit rate difference exceeding the preset bit rate fluctuation range, and the precoding bit rate being greater than the pre-allocated bit rate

The bit rate difference exceeding the preset bit rate fluctuation range, and the precoding bit rate being less than the pre-allocated bit rate

Determining the actual encoding quantization parameter of the current macroblock subset in the previous video frame as the target encoding quantization parameter of the current macroblock subset in the current video frame

Acquiring the target encoding quantization parameter of the current macroblock subset in the current video frame by raising the actual encoding quantization parameter of the current macroblock subset in the previous video frame

Acquiring the target encoding quantization parameter of the current macroblock subset in the current video frame by raising the actual encoding quantization parameter of the current macroblock subset in the previous video frame

Determine ↓

Determine ↓

Determine ↓

Using the target coding quantization parameter of the current macroblock subset in the current video frame to code each macroblock in the current macroblock subset, and calculating the actual coding weight of each macroblock subset in the current video frame in response to completing the coding of each macroblock subset in the current video frame

FIG. 2B

Estimating the video pre-buffer capacity during video transmission at the current network bandwidth based on the pre-allocated bit rate of the current video frame at the current network bandwidth and the lower coding bit rate limit of the associated video frames ⌐∿S310

No

Determining whether the video pre-buffer capacity exceed the preset coding threshold value ⌐∿S320

Yes

Discarding the current video frame ⌐∿S330

Predicting a precoding bit rate of the current macroblock subset in response to coding the current macroblock subset in a current video frame, based on the actual coding weight of each macroblock subset of the current video frame in the previous video frame, and the actual coding bit rate of each coded macroblock subset in the current video frame ⌐∿S340

Acquiring a target coding quantization parameter of the current macroblock subset in the current video frame by adjusting an actual coding quantization parameter of the current macroblock subset in the previous video frame, based on the bit rate difference between the precoding bit rate and the pre-allocated bit rate of the current video frame at the current network bandwidth, adjust the actual coding quantization parameter of the current macroblock subset in the previous video frame ⌐∿S350

Updating the corresponding actual video buffer capacity based on the actual coding amount of the current video frame after actual coding ⌐∿S360

FIG. 3A

FIG. 3B

410

420

| Bit rate prediction module | Coding quantization module |
|---|---|

FIG. 4

| Processor | 50 | Storage device | 51 | Communication device | 52 |
|---|---|---|---|---|---|

FIG. 5

## INTERNATIONAL SEARCH REPORT

| International application No. |
|---|
| **PCT/CN2021/129185** |

**A. CLASSIFICATION OF SUBJECT MATTER**

H04N 19/124(2014.01)i; H04N 19/105(2014.01)i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI; CNTXT; USTXT; EPTXT; WOTXT; CNABS; IEEE: 编码, 权重, 占比, 前一帧, 上一帧, 预编码, 码率, 量化参数, 宏块, 子集, cod+, weight, macro 1w block, previous 1w frame, rate, pre 1w cod+, QP, quantization 1w parameter, subset

**C. DOCUMENTS CONSIDERED TO BE RELEVANT**

| Category* | Citation of document, with indication, where appropriate, of the relevant passages | Relevant to claim No. |
|---|---|---|
| PX | CN 112272299 A (GUANGZHOU WANGXING INFORMATION TECHNOLOGY CO., LTD.) 26 January 2021 (2021-01-26) claims 1-15 | 1-15 |
| A | CN 103841418 A (INSTITUTE OF ACOUSTICS, CHINESE ACADEMY OF SCIENCES et al.) 04 June 2014 (2014-06-04) entire document | 1-15 |
| A | CN 101795415 A (HANGZHOU H3C TECHNOLOGIES CO., LTD.) 04 August 2010 (2010-08-04) entire document | 1-15 |
| A | CN 110049321 A (TENCENT TECHNOLOGY SHENZHEN CO., LTD.) 23 July 2019 (2019-07-23) entire document | 1-15 |
| A | US 2007025441 A1 (NOKIA CORP.) 01 February 2007 (2007-02-01) entire document | 1-15 |
| A | CN 111200734 A (ZHEJIANG UNIVIEW TECHNOLOGIES CO., LTD.) 26 May 2020 (2020-05-26) entire document | 1-15 |

☐ Further documents are listed in the continuation of Box C.　　☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **13 January 2022** | **07 February 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/129185** |

| Patent document cited in search report | | | Publication date (day/month/year) | Patent family member(s) | | | Publication date (day/month/year) |
| --- | --- | --- | --- | --- | --- | --- | --- |
| CN | 112272299 | A | 26 January 2021 | None | | | |
| CN | 103841418 | A | 04 June 2014 | None | | | |
| CN | 101795415 | A | 04 August 2010 | CN | 101795415 | B | 08 February 2012 |
| CN | 110049321 | A | 23 July 2019 | US | 2020260085 | A1 | 13 August 2020 |
| | | | | US | 11202072 | B2 | 14 December 2021 |
| | | | | WO | 2019140952 | A1 | 25 July 2019 |
| | | | | EP | 3742727 | A1 | 25 November 2020 |
| | | | | EP | 3742727 | A4 | 02 December 2020 |
| | | | | JP | 2021511756 | A | 06 May 2021 |
| US | 2007025441 | A1 | 01 February 2007 | CN | 101233757 | A | 30 July 2008 |
| | | | | EP | 1908291 | A1 | 09 April 2008 |
| | | | | KR | 20080031344 | A | 08 April 2008 |
| | | | | WO | 2007012928 | A1 | 01 February 2007 |
| CN | 111200734 | A | 26 May 2020 | WO | 2020103384 | A1 | 28 May 2020 |
| | | | | EP | 3886436 | A1 | 29 September 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011360060